# EUROPÄISCHE PATENTSCHRIFT

(11) **EP 2 163 867 B1**
(45) Veröffentlichungstag und Bekanntmachung des Hinweises auf die Patenterteilung: **10.09.2014**
(21) Anmeldenummer: 08164177.1
(22) Anmeldetag: 11.09.2008
(51) Int. Cl.: G01G 13/02

(54) **Einwaagegefäss zum Einwägen von Substanzen**
Initial weight container for weighing substances
Récipient de pesage destiné à peser des substances

(43) Veröffentlichungstag der Anmeldung: 17.03.2010
(73) Patentinhaber: Mettler-Toledo AG, 8606 Greifensee (CH)
(72) Erfinder: Lüchinger, Paul, 8610, Uster (CH); Ehrbar, Sandra, 8605, Gutenswil (CH)

(56) Entgegenhaltungen:
- EP-A- 1 947 427
- DE-A1- 19 841 478
- US-A1- 2007 006 942

## Beschreibung

Die Erfindung betrifft ein Einwaagegefäss zum Einwägen von Substanzen.

Einwaagegefässe wie Laborbehälter, Flaschen, Becher, Schalen, Kolben, Reagenzgläser und dergleichen sind im Stand der Technik bekannt. US20070006942A1, EP1947427A1 und DE198414A1 offenbaren bekannte Gefäße, die als Zielgefäße bei Dosiervorgängen dienen. Sie dienen beispielsweise als Zielgefässe bei Dosiervorgängen, bei denen von Hand beispielsweise pulver- oder pastenförmige Substanzen eindosiert werden. Anschliessend werden die pulver- oder pastenförmigen Substanzen im Einwaagegefäss durch Beigabe eines Lösungsmittels aufgelöst und beispielsweise in einem HPLC- Gerät (high performance liquid chromatography) analysiert. Diese Geräte arbeiten mit einer Relativmethode und müssen deshalb vor der eigentlichen Analyse eines unbekannten Stoffes mittels einer bekannten Standardlösung kalibriert werden. Besonders wichtig ist dabei, dass die genaue Konzentration der Standardlösung bekannt ist, da die Messunsicherheit des Analysenresultates nicht besser sein kann als jene der Gehaltsangabe beziehungsweise der Konzentrationsangabe der verwendeten Standardlösung. Üblicherweise werden Lösungen im Mischverhältnis von 1:1000 bis 1: 10'000 hergestellt und die Konzentration in Milligramm pro Liter angegeben. Typischerweise wird die Substanz in ein geeichtes Einwaagegefäss, dessen Volumen somit durch eine Eichmarke definiert ist, möglichst genau eingewogen. Anschliessend wird das Einwaagegefäss bis zur Eichmarke mit Lösungsmittel aufgefüllt.

Da pulver- oder pastenförmigen Substanzen meistens von Hand eindosiert werden und die minimal von Hand dosierbare Substanzmenge natürlichen Grenzen, beispielsweise einer ruhigen Hand der eindosierenden Person, der Formgebung des Spatels, des Adhäsions- und Kohäsionsverhalten der Substanzpartikel und dergleichen, unterliegen, führt die geforderte Präzision des Mischverhältnisses dazu, dass eine verhältnismässig grosse Menge einer Lösung, beispielsweise 100ml, hergestellt werden muss. Für die HPLC- Analyse werden von dieser Lösung dann beispielsweise lediglich 2ml verwendet, der grosse Rest muss entsorgt werden.

Die Dimensionen eines Einwaagegefässes zur Herstellung einer Lösung sind daher entsprechend gross, da vorzugsweise die Substanz in dasjenige Einwaagegefäss eindosiert wird, in welchem auch durch hinzufügen des Lösungsmittels die Lösung hergestellt wird.

Bei gravimetrischen Messinstrumenten mit hoher Auflösung, das heisst für Einwaagen im Milligramm- oder Mikrogrammbereich, unterliegt nicht nur deren Höchstlast, das heisst die maximal auflegbare Last, physikalischen Grenzen. Auch die Grösse des Einwaagegefässes hat einen erheblichen Einfluss auf das Wägeergebnis. Die Problematik liegt insbesondere darin, dass kleinste Temperaturdifferenzen zu Auftriebsänderungen des Einwaagegefässes führen. Beispielsweise dehnt sich das Material eines 100ml Glaskolben bei 0.1 °C soweit aus, dass infolge des dadurch grösseren, verdrängten Luftvolumens eine Abweichung von 40 Mikrogramm festgestellt werden kann. Die Fertigungstoleranzen solcher Einwaagegefässe betreffend deren Eigenmasse (Taragewicht) und die darauf einwirkenden Temperaturschwankungen verunmöglichen eine vernünftige Kompensation des Auftriebes. Deshalb können kaum kleinste Mengen in grosse Einwaagegefässe hochpräzise eindosiert werden.

Im Zuge steigender Produktionskosten und Entsorgungskosten von Abfällen wird versucht, die Menge der hergestellten Lösungen möglichst zu reduzieren. Es würde sich daher anbieten, Waagen mit höherer Auflösung zu verwenden, um noch kleinere Substanzmengen mit höherer Präzision einwägen zu können, um auf dasselbe Mischungsverhältnis bei geringerer Menge zu kommen. Wie vorangehend ausgeführt, setzt diesem Ansinnen aber die Grösse des Einwaagegefässes Grenzen. Ein möglicher Lösungsansatz des Auftriebproblems besteht deshalb darin, die Grösse des Einwaagegefässes zu reduzieren.

Ansatzweise wird in der Laborpraxis diese Idee umgesetzt, indem statt direkt in ein Einwaagegefäss, die Substanz zuerst auf ein Wägeschiffchen oder ein Wägepapier dosiert wird. Anschliessend wird das Wägepapier zu einer Tüte gerollt. Diese Tüte oder das Wägeschiffchen wird hernach in den Einlass eines Behältnisses gesteckt und die Substanz mit einem Lösungsmittel in das Behältnis hinein gespült. Diese Vorgehensweise birgt aber einige Nachteile und Gefahren.

Die grössten Nachteile sind die erreichbare Präzision und die Kontaminationsgefahr durch die Gesundheit einer Person und die Umwelt gefährdende Substanzen. Beim anschliessenden Rollen des Papiers sowie beim Transfer des mit Substanz belegten Wägepapiers oder Wägeschiffchens von der Waagschale zum Behältnis, kann Substanz verschüttet werden. Ferner können der Arbeitsraum und dessen Benutzer durch die Gesundheit gefährdende Substanzen kontaminiert werden, wenn die Substanzen flüchtige, beispielsweise kleinste Substanzpartikel aufweisen. Beim Ausspülen des Papiers oder Wägeschiffchens können Partikel an deren Oberfläche, insbesondere an nicht oder schlecht benetzten Stellen hängen bleiben und somit die Konzentration der Lösung verändern. Nicht zu vernachlässigen ist auch die Gefahr, dass während des Transfers die Substanz durch Verunreinigungen in der Umgebungsluft verschmutzt werden kann.

Aufgabe der vorliegenden Erfindung ist es daher, ein Einwaagegefäss zum Einwiegen von Substanzen zu schaffen, dessen Eigenvolumen und Taralast möglichst klein ist und welches eine sichere und benutzerfreundliche Handhabung für die weiteren Verarbeitungsschritte gewährleistet.

Diese Aufgabe wird durch ein Einwaagegefäss gemäss dem ersten Anspruch erfüllt.

Ein Einwaagegefäss zum Einwägen von fliessfähigen Substanzen weist eine Einfüllöffnung, einen rohrförmigen Mantel und eine Bodenpartie auf. Die Bodenpartie ist mit dem rohrförmigen Mantel verbunden und schliesst den rohrförmigen Mantel in der Schwerkraftrichtung dicht ab, wenn das Einwaagegefäss in seiner Gebrauchslage ist. Ein derart ausgestaltetes Einwaagegefäss kann auf die Waagschale einer Waage gestellt werden und es können wie in einen Becher fliessfähige Substanzen eingefüllt werden, ohne dass diese Substanzen aus dem Einwaagegefäss austreten.

Erfindungsgemäss kann die Bodenpartie, durch eine äussere Krafteinwirkung auf das Einwaagegefäss und/oder durch die Einwirkung eines Lösungsmittels auf das Einwaagegefäss, eine Auslassöffnung bildend, geöffnet werden. Das ansonsten in Schwerkraftrichtung dichte Einwaagegefäss kann bei geöffneter Auslassöffnung mit einem Fluid durchgespült werden.

Mit der Umschreibung durch äussere Krafteinwirkung auf das Einwaagegefäss wird deutlich, dass die Auslassöffnung durch eine reine Krafteinwirkung und nicht durch ein vom Einwaagegefäss getrenntes Hilfsmittel wie beispielsweise eine Hohlnadel, eine Schneide, ein Bohrer und dergleichen geöffnet wird. Es liegt somit ein indirekter Öffnungsvorgang vor, bei welchem an einer definierten Stelle des Einwaagegefässes eine Kraft einwirken muss und an mindestens einer anderen Stelle des Einwaagegefässes die Reaktionskraft abgestützt wird, um die Auslassöffnung zu öffnen. Das Einwaagegefäss wird demzufolge durch die reine Krafteinwirkung partiell deformiert und eine Auslassöffnung gebildet. Dies ist von grösster Wichtigkeit, da die vorangehend erwähnten Hilfsmittel beim Öffnen der Auslassöffnung zumindest teilweise durch die Lösung benetzt und infolge dessen kontaminiert werden könnten. Das kontaminierte Hilfsmittel müsste hernach aufwändig gereinigt oder entsorgt werden. Die definierte Stelle des Einwaagegefässes zur Einleitung der Kraft und die übrigen Stellen zur Abstützung der daraus resultierenden Reaktionskraft werden im Unterschied dazu niemals durch Lösungsmittel benetzt.

Mit Durchspülen ist gemeint, dass eine Flüssigkeit oder ein Gas durch die Einfüllöffnung eingeleitet wird und die im Einwaagegefäss vorhandene, beispielsweise pulverförmige Substanz mittels des Fluids durch die Auslassöffnung aus dem Einwaagegefäss gespült wird. Selbstverständlich können bereits beim Öffnen der Auslassöffnung Teile der Substanz infolge der Einwirkung der Schwerkraft durch dieselbe in ein weiteres Behältnis fallen. Es ist zu betonen, dass die Durchspülbarkeit des erfindungsgemässen Einwaagegefässes eine zentrale Rolle spielt. Nur durch diese Möglichkeit ist gewährleistet, dass die Substanz restlos aus dem Einwaagegefäss heraus in ein Behältnis gespült werden kann. Würde die Substanz bereits im Einwaagegefäss mit einem Lösungsmittel aufgelöst und hernach beispielsweise in ein grösseres Behältnis umgeschüttet, würde ein kleiner Teil der Lösung und somit ein kleiner Teil der Substanz im Einwaagegefäss verbleiben (benetzte Oberfläche). Durch die anschliessende Verdünnung im Behältnis würde die Konzentration verfälscht, da bei der Berechnung der Konzentration immer noch von der ursprünglich eingewogenen Substanzmenge ausgegangen würde. Ferner wäre dieser Vorgang stark vom Lösungsvermögen des Lösungsmittels abhängig und infolge des kleinen, vorhandenen Volumens des Einwaagegefässes deshalb nur vereinzelt einsetzbar.

Es können selbstverständlich auch mehrere Einwaagegefässe in Serie abgefüllt, anschliessend nacheinander auf das Behältnis aufgesetzt und durchgespült werden. Das Behältnis kann beispielsweise ein volumetrisch kalibrierter Messkolben sein. Nach dem Entfernen des Einwaagegefässes kann dieser, falls erforderlich, noch bis zur aufgedruckten Eichmarke mit Lösungsmittel aufgefüllt werden.

Vorzugsweise ist die äussere Krafteinwirkung mittels des Aufsetzens des Einwaagegefässes auf einen Einlass des Behältnisses erzeugbar. Das heisst, dass einem Schlüssel-Schloss-Prinzip ähnlich, erst durch ein Aufsetzen des Einwaagegefässes auf eine geeignete Struktur die Auslassöffnung geöffnet wird. Dies beugt einem ungewollten Öffnen der Auslassöffnung vor. Geeignete Strukturen können beispielsweise ein Flaschenhals, ein Becherrand, ein Rohrstutzen, die Mündung eines Reagenzglases und dergleichen mehr sein. Vorteilhafterweise ist die Bodenpartie so ausgestaltet, dass die Auslassöffnung weit in den Innenraum des Behältnisses oder zumindest in den Einlass desselben hineinreicht. Dadurch kann der Einlass, beispielsweise der sogenannte Normschliff bei Behältnissen, vor Verschmutzung geschützt werden.

Es sind auch Ausführungen denkbar, bei denen die äussere Krafteinwirkung durch Drehen des Einwaagegefässes oder eines Teils des Einwaagegefässes relativ zum Einlass des Behältnisses, erzeugbar ist.

Ferner kann die Bodenpartie einen Verschlusskörper aufweisen, der durch die äussere Krafteinwirkung entfernbar und/oder durch das Lösungsmittel auflösbar ist. Als Verschlusskörper gilt auch eine hauchdünne Klebestelle, nach deren Auflösung beispielsweise eine Naht in der Bodenpartie aufplatzt oder welche Naht hernach mit geringer Krafteinwirkung aufgespreizt werden kann.

Je nach Wunsch kann die Auslassöffnung, beziehungsweise die Kombination einer Auslassöffnung mit einem Verschlusskörper, derart ausgestaltet sein, dass sich die Auslassöffnung nach dem einmaligen Öffnen nicht mehr verschliessen lässt.

Selbstverständlich kann die Auslassöffnung auch wieder verschliessbar ausgestaltet sein. Um dies auf einfache Art und Weise zu erreichen, ist vorteilhafterweise mindestens ein Teil der Bodenpartie aus einem gummielastischen Material gefertigt, welches durch Belastung deformiert werden kann und nach der Entlastung in die ursprüngliche Form zurückfindet.

In einer weiteren Ausführung des erfindungsgemässen Einwaagegefässes weist die Auslassöffnung eine unter seitlicher Krafteinwirkung aufbrechbare, schlitzförmig ausgebildete Sollbruchstelle auf. Dadurch, dass eine Sollbruchstelle ausgebildet ist, ist das Einwaagegefäss abgesehen von der Einfüllöffnung, flüssigkeits- und gasdicht. Sollbruchstellen werden üblicherweise durch im Material angeordnete Dünnstellen ausgebildet. Bei mechanischer Belastung auf das Material wird dieses im Bereich der Dünnstellen überbeansprucht, wodurch ein gezieltes Zerreissen beziehungsweise Aufbrechen des Materials an diesen Stellen erfolgt.

Auch wenn die Sollbruchstelle infolge des Aufbrechens nicht wieder gasdicht verschliessbar ist, kann eine flüssigkeitsdichte, nach dem Aufbrechen der Sollbruchstelle sich unter seitlicher Krafteinwirkung öffnende und sich variabel erweiternde, beziehungsweise infolge einer Entlastung sich variabel schliessende Auslassöffnung vorhanden sein. Bei der Entlastung kann somit ein Durchströmen des Fluids gebremst oder sogar gestoppt werden.

Zur Erzeugung der seitlichen Krafteinwirkung, aber auch von Scherkräften und Aufreisskräften kann das Einwaagegefäss ferner geeignete Mittel aufweisen. Diese Mittel können eine spezifische Formgebung, beispielsweise ein elliptischer Querschnitt des Mantels sein, aber auch daran ausgebildete, keilförmige Mantelabschnitte, Umlenkhebel, Vorsprünge, Schneiden und dergleichen mehr. Diese Mittel müssen auch nicht in zwingender Weise einstückig mit dem Einwaagegefäss verbunden sein. Auch eine geeignet ausgestaltete Hülse, welche relativ zum Mantel linear verschiebbar und/oder drehbar ist, kann der Erzeugung von seitlicher Krafteinwirkung, von Scherkräften und Aufreisskräften dienen.

Eine weitere Ausgestaltung des erfindungsgemässen Einwaagegefässes kann eine Einrastvorrichtung aufweisen, welche die Auslassöffnung irreversibel geöffnet hält.

Dies hat den Vorteil, dass ein einmal verwendetes Einwaagegefäss nicht mehr verwendet werden kann. Dadurch wird der Benutzer gezwungen, für die nächste Einwaage ein neues, wirklich sauberes Einwagegefäss zu benutzen. Gerade im Bereich hochreaktiver Substanzen können bereits kleinste, durch Unachtsamkeit verursachte Vermischungen zweier Substanzen zu verheerenden Folgen führen.

Der weiter oben erwähnte Verschlusskörper kann verschieden ausgestaltet sein. Die einfachste Lösung ist eine Kugel, welche in die Auslassöffnung eingepresst ist und durch geeignete Mittel, beispielsweise mit einem umlaufenden Bund in Schwerkraftrichtung aus der Auslassöffnung gedrückt werden kann. Der Verschlusskörper fällt dann in das Behältnis.

Vorzugsweise sind die chemischen und physikalischen Eigenschaften des Einwaagegefässes und gegebenenfalls des Verschlusskörpers, beispielsweise deren genaues Gewicht und Volumen, deren Suszeptibilität, chemische Beständigkeit und dergleichen bekannt und gegebenenfalls am Einwaagegefäss notiert oder sogar in einem am Einwaagegefäss angeordneten elektronischen Speichermedium (RFID-Tag) gespeichert. Dadurch kann beim Herstellen der Lösung beispielsweise das Gewicht und/oder Volumen des Verschlusskörpers beim Zuführen des Lösungsmittels berücksichtigt werden. Ferner kann automatisch überprüft werden, ob das aufgelegte Einwaagegefäss überhaupt zusammen mit dem vorgesehenen Lösungsmittel verwendet werden darf. Bei auflösbaren beziehungsweise zerfallenden Verschlusskörpern müssen selbstverständlich auch die Stoffeigenschaften des Verschlusskörpermaterials bekannt sein. Der auflösbare Verschlusskörper muss nicht zwingend aus einem inerten Feststoff gefertigt sein. Er kann für die dem Durchspülen nachfolgenden Verfahrensschritte auch dienliche Eigenschaften zur Lösung beisteuern. So kann das verwendete Material beispielsweise ein Inhibitor, ein Katalysator oder ein Indikator sein, es kann hydrophile Eigenschaften aufweisen oder Ausfällungen in der Lösung verursachen. Bei zerfallenden Verschlusskörpern zerfällt der Verschlussstopfen lediglich zu kleinen Bruchstücken oder Pulver, welche nicht im Lösungsmittel auflösbar sind. Je nach Materialeigenschaften des auflösbaren Verschlusskörpers kann dessen Material durch den Kontakt mit Lösungsmittel vollständig in eine Gasphase übergehen und entweichen, ohne hernach Teil der Lösung zu sein.

Idealerweise kann der Verschlusskörper beim Auflösungsprozess mithelfen. Schon eine Kugel kann beim Schütteln des Behältnisses mithelfen, dass ausreichende Turbulenzen im Lösungsmittel vorhanden sind, um die benötigte Auflösungszeit der Substanz entscheidend zu verkürzen. Noch bessere Resultate lassen sich erzielen, wenn der Verschlusskörper beispielsweise ein Magnetstäbchen eines Magnetrührers ist.

Es ist auch vorstellbar, dass Substanzen eindosiert werden, die gewisse Verunreinigungen aufweisen. Um den Anteil an Verunreinigungen mittels einer Differenzmessung zu bestimmen, kann es von Vorteil sein, dass diese im Einwaagegefäss verbleiben. Wenn die Verunreinigungen durch das verwendete Lösungsmittel nicht löslich sind, können durch ein Gitter, eine Membrane oder ein Filtereinsatz, die im Bereich der Auslassöffnung angeordnet sind, Verunreinigungen im Einwaagegefäss zurückgehalten werden. Mittels statischer Mischerelemente könnte gegebenenfalls bereits beim Durchspülen der Auflösungsprozess vollzogen werden.

Damit möglichst keine Substanzpartikel im Einwaagegefäss haften bleiben, weisen die der Substanz zugewandten Innenflächen des rohrförmigen Mantels, der Bodenpartie und der Auslassöffnung eine möglichst glatte und/oder beschichtete Oberfläche auf. Aus der Nanotechnogie bekannte Oberflächenbeschichtungen können beispielsweise den sogenannten Lotuseffekt aufweisen, wodurch das Lösungsmittel abperlt und restlos alle Pulverpartikel mitgerissen werden. Vorzugsweise sind die Innenflächen in einer dunklen Farbe gehalten, so dass anhaftende Substanzpartikel, welche üblicherweise eine helle Farbe aufweisen, besser sichtbar sind.

Um eine stabile Auflage des Einwaagegefässes auf der Waagschale zu gewährleisten, weist dieses zumindest einen Standfuss auf. Durch eine geeignete Ausgestaltung des Standfusses kann ferner einem unbeabsichtigten Öffnen der Auslassöffnung noch mehr vorgebeugt werden. Besonders vorzuziehen ist deshalb ein rohrförmiger Standfuss, welcher die definierte Stelle, auf welche die Kraft zum Öffnen der Auslassöffnung einwirken muss, soweit abdeckt, dass diese Stelle nur von einer festgelegten Bedienungsseite her zugänglich ist. Es ist auch denkbar, dass die Innenkontur des rohrförmigen Standfusses nur auf ein ganz bestimmtes Behältnis angepasst ist, so dass nur beim Vorhandensein eines solchen Behältnisses die Auslassöffnung geöffnet werden kann.

Möglicherweise soll nach dem Eindosieren einer Substanz diese nicht sogleich weiterverarbeitet, das heisst, aus dem Einwaagegefäss herausgespült werden. Es kann daher von Vorteil sein, dass ein die Einfüllöffnung des Einwaagegefässes abschliessender, öffnenbarer und wieder verschliessbarer Verschlussdeckel vorhanden ist. Dieser Verschlussdeckel ist vorzugsweise mit dem Einwaagegefäss verbunden, dies ist aber nicht zwingend erforderlich. Der Deckel kann ferner einen Anschluss zum Einbringen eines Fluids wie Gas oder Lösungsmittel in den Innenraum aufweisen, so dass Substanzen auch unter hohem Duck aus dem Einwaagegefäss herausgespült oder geblasen werden können.

Wie bereits weiter oben beschrieben, kann das Einwaagegefäss ein elektronisches Speichermedium zum speichern von Informationen und/oder ein maschinenlesbares Kennzeichnungsfeld aufweisen. Das maschinenlesbare Kennzeichnungsfeld kann mit Fliesstext, aber auch mit einem Barcode oder einem Matrixcode versehen sein. Wie das nachfolgend beschriebene Verfahren zur Herstellung einer Lösung mit einer Dosiervorrichtung, einer Waage, einem Behältnis und einem Einwaagegefäss zeigt, können darin nicht nur Informationen, die das Einwaagengefäss betreffen, gespeichert werden.

Dieses Verfahren weist im Wesentlichen die folgenden Schritte auf:
- In einem ersten Schritt wird ein neuwertiges, unbenutztes Einwaagegefäss auf eine Waagschale der Waage aufgelegt.
- In einem zweiten Schritt wird die Waage tariert.
- In einem dritten Schritt wird mittels der Dosiervorrichtung eine fliessfähige Substanz in vorgegebener Menge durch die Einfüllöffnung in das Einwaagegefäss eindosiert.
- Sofern ein Einwaagegefäss mit einem elektronischen Speichermedium vorhanden ist, werden in einem Zwischenschritt Informationen zur Substanz, gegebenenfalls zum Einwaagegefäss und zum Dosiervorgang in das elektronische Speichermedium des Einwaagegefässes eingespeichert und/oder in das Kennzeichnungsfeld des Einwaagegefässes geschrieben. Die Informationen zur Substanz wie deren genaue chemische Zusammensetzung und Struktur, deren Herstellungsdatum, Gefahrenhinweise, Hinweise zum Lösungsmittel, zur Lagerung und dergleichen mehr können beispielsweise in der Dosiervorrichtung, in einer Datenbank oder in einem, an dem Vorratsbehälter beziehungsweise einer Dosiereinheit angeordneten Speicher, aus welcher die Substanz entnommen wurde, gespeichert sein. Informationen zum Dosiervorgang können beispielsweise das Datum, die genaue Uhrzeit, das Taragewicht des Einwaagegefässes, Informationen über die Umgebung wie Raumtemperatur und Feuchtigkeit, sowie Angaben zur Bedienungsperson umfassen.
- In einem vierten Schritt wird das Einwaagegefäss von der Waagschale entfernt und auf die Einlassöffnung eines Behältnisses aufgesetzt, wobei die Bodenpartie weit in das Behältnis hineinragt.
- In einem fünften Schritt wird die Auslassöffnung unter einer Krafteinwirkung, beispielsweise durch eine in senkrechter Richtung auf den Mantel oder Standfuss wirkende Kraft geöffnet, beziehungsweise unter Einbringung eines Fluids der auflösbare Verschlusskörper aufgelöst.
- In einem sechsten Schritt wird unter Einbringung eines Fluids das Einwaagegefäss durchgespült, so dass die gesamte Substanzmenge aus dem Einwaagegefäss in das Behältnis gespült wird. Anschliessend kann die eingefüllte Menge des Fluids gravimetrisch oder volumetrisch bestimmt werden oder das Behältnis bis zu einer bestimmten Marke mit weiterem Fluid, insbesondere Lösungsmittel, aufgefüllt werden.
- Sofern ein Einwaagegefäss mit einem elektronischen Speichermedium vorhanden ist, werden in einem weiteren Schritt die im elektronischen Speichermedium des Einwaagegefässes eingespeicherten und/oder in dessen Kennzeichnungsfeld eingetragenen Informationen auf ein am Behältnis angeordnetes elektronisches Speichermedium eingespeichert und/oder in ein Kennzeichnungsfeld des Behältnisses übertragen. Durch dieses Verfahren ist eine lückenlose Rückverfolgbarkeit und Dokumentation der Lösungszubereitung gewährleistet.

Das erfindungsgemässe Einwaagegefäss wird im Folgenden anhand von Beispielen und mit Bezugnahme auf die Zeichnungen näher erläutert. Darin zeigen:
- Figur 1A: eine erste Ausführung eines erfindungsgemässen Einwaagegefässes in der Aufsicht und im Schnitt mit einer sich beim Aufsetzen des Einwaagegefässes auf ein Behältnis öffnenden, schlitzförmigen Auslassöffnung beziehungsweise Sollbruchstelle;
- Figur 1B: der in Figur 1A angegebene Querschnitt X-X mit geschlossener Auslassöffnung beziehungsweise Sollbruchstelle;
- Figur 1C: derselbe Querschnitt X-X aus Figur 1B, jedoch mit geöffneter Auslassöffnung;
- Figur 1D: der in Figur 1A angegebene Querschnitt X-X mit geschlossener im Winkel α zum grössten Querschnittdurchmesser angeordneter Sollbruchstelle beziehungsweise Auslassöffnung;
- Figur 2A: eine zweite Ausführung eines erfindungsgemässen Einwaagegefässes mit einer Hülse im nicht aufgesetzten, geschlossenen Zustand, in der Aufsicht und im Schnitt, welche Hülse beim Aufsetzen auf ein Behältnis in linearer Richtung verschiebbar ist, dadurch die Bodenpartie an einer vorgesehenen Stelle aufreisst und die Auslassöffnung freigibt;
- Figur 2B: die in Figur 2A dargestellte zweite Ausführung im aufgesetzten und geöffneten Zustand;
- Figur 3: eine dritte Ausführung eines erfindungsgemässen Einwaagegefässes in der Aufsicht und im Schnitt mit einer sich beim Aufsetzen des Einwaagegefässes auf ein Behältnis öffnenden Auslassöffnung;
- Figur 4: eine vierte Ausführung eines erfindungsgemässen Einwaagegefässes in der Aufsicht und im Schnitt mit einem Verschlusskörper, welcher sich beim Aufsetzen auf ein Behältnis aus der Auslassöffnung löst;
- Figur 5: eine fünfte Ausführung eines erfindungsgemässen Einwaagegefässes in der Aufsicht und im Schnitt mit einem Verschlusskörper, welcher sich mittels der Zugabe von Lösungsmitteln auflöst;
- Figur 6: die schematische Darstellung eines Informationstransfers zwischen einem elektronischen Speichermedium einer Dosiervorrichtung mit eingesetzter Dosiereinheit und Waage und dem elektronischen Speichermedium eines auf der Waagschale der Waage aufgelegten Einwaagegefässes;
- Figur 7: die schematische Darstellung eines Informationstransfers zwischen dem elektronischen Speichermedium des Einwaagegefäss aus der Figur 6 und einem elektronischen Speichermedium eines Behältnisses.

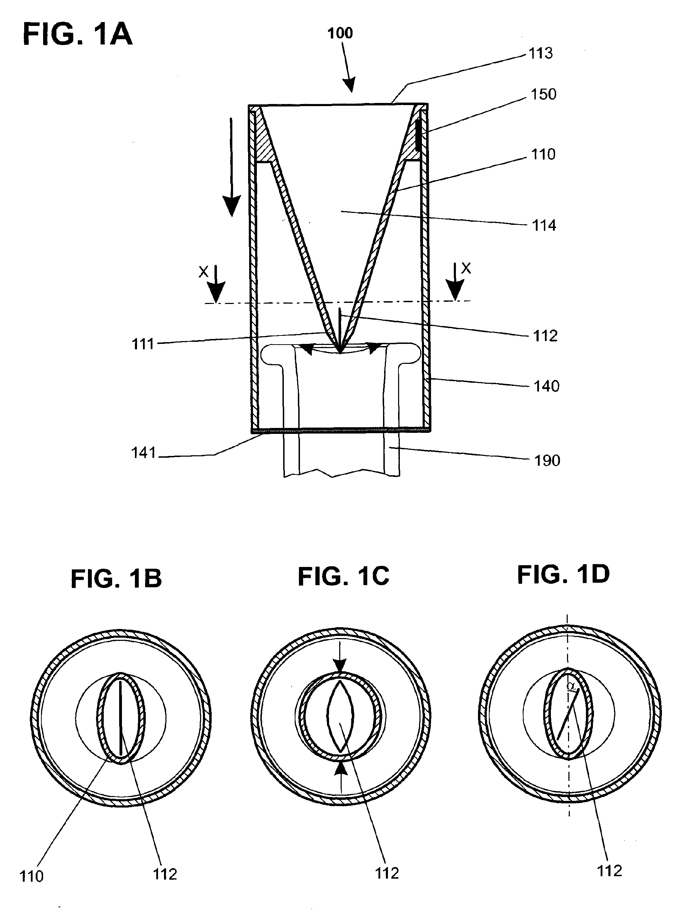

Das in Figur 1 in seiner Gebrauchslage dargestellte Einwaagegefäss 100 in einer ersten Ausführung, weist einen rohrförmigen Mantel 110 und eine Bodenpartie 111 auf, welche den rohrförmigen Mantel 110 in der Gebrauchslage in Richtung der Schwerkraft, folglich gegen unten, abschliesst. In der der Schwerkraft entgegengesetzten Richtung, folglich gegen oben, ist der vom rohrförmigen Mantel 110 und der Bodenpartie 111 umgrenzte Innenraum 114 offen und frei zugänglich. Das obere Ende des rohrförmigen Mantels 110 bildet somit die Einfüllöffnung 113. Der Innenraum 114 ist trichterförmig ausgebildet, so dass an der Wand des rohrförmigen Mantels 110 klebende Substanzreste besser sichtbar und besser durch den rohrförmigen Mantel 110 spülbar sind. Vorzugsweise ist der Innenraum 114 in einer dunklen Farbe gehalten, so dass anhaftende Substanzpartikel, welche üblicherweise eine helle Farbe aufweisen, besser sichtbar sind.

Um eine stabile Auflage des Einwaagegefässes 100 auf einer nicht dargestellten Waagschale zu erreichen, weist dieses einen Standfuss 140 auf, welcher im Bereich der Einlassöffnung 113 mit dem rohrförmigen Mantel 110 verbunden ist. Durch die rohrförmige Ausgestaltung des Standfusses 140 kann ferner einer Beschädigung und einer Kontamination der Bodenpartie 111 vorgebeugt werden. Dieser Schutz kann noch verbessert werden, wenn eine zerstörbare Abdeckfolie 141, beispielsweise aus Aluminium, die verbleibende Öffnung des Standfusses 140 abdeckt. Diese wird beim Aufsetzen des Einwaagegefässes 100 auf ein in Figur 1A mit dünner Linie dargestelltes Behältnis 190 zerstört.

Die Bodenpartie 111 ist ferner mit einer im unbelasteten Zustand schlitzförmig ausgebildeten Auslassöffnung 112 versehen. Die schlitzförmige Auslassöffnung 112 eines neuwertigen Einwaagengefässes 100 kann verklebt sein, aber auch als dünne Sollbruchstelle ausgebildet sein. Durch seitliche Krafteinwirkung kann die Auslassöffnung 112 geöffnet, beziehungsweise die Sollbruchstelle aufgebrochen werden. Damit dies geschehen kann, muss der rohrförmige Mantel 110 eine geeignete Form aufweisen. Vorzugsweise ist der rohrförmige Mantel 110 wie in der Figur 1A dargestellt, trichterförmig ausgebildet.

Ferner weist der rohrförmige Mantel 110 mindestens teilweise über seine trichterförmig ausgebildete Länge einen elliptischen Querschnitt auf, wie dies anhand des Querschnitts X-X in Figur 1B dargestellt ist. Dadurch, dass der grössere Durchmesser des elliptischen Querschnitts in derselben senkrechten, die schlitzförmige Auslassöffnung 112 enthaltenden Ebene angeordnet ist, kann die vorangehend erwähnte, seitliche Krafteinwirkung wie dies in Figur 1C dargestellt ist, beim Aufsetzen des Einwaagegefässes 100 auf ein Behältnis erzeugt und die Auslassöffnung 112 geöffnet werden. Selbstverständlich sind auch andere, geeignete Ausgestaltungen des rohrförmigen Mantels 110 mit beispielsweise rechteckigen, quadratischen oder rhombischen Querschnitten möglich.

Wenn zum Aufbrechen der Sollbruchstelle zusätzlich Scherkräfte erzeugt werden sollen, muss wie in Figur 1D dargestellt, die Ausrichtung der schlitzförmigen Auslassöffnung 112 zum grössten Durchmesser des elliptischen Querschnitts unter einem spitzen Winkel α angeordnet sein. Je nachdem aus welchen Materialien die Bodenpartie 111 gefertigt ist, kann sich beim Entfernen des Einwaagegefässes 100 vom Behältnis dessen Auslassöffnung 112 wieder schliessen (elastisch deformierbares Material) oder eben nicht (plastisch deformierbares Material).

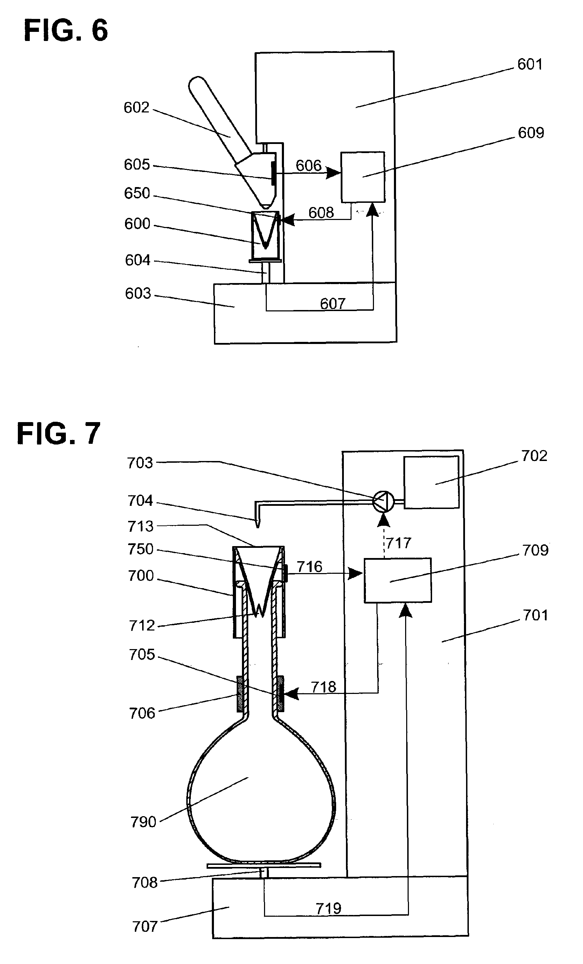

Vorzugsweise ist ferner ein elektronisches Speichermedium 150 (beispielsweise ein RFID-Tag) vorhanden, mittels welchem das Einwaagegefäss 100 durch eine eingespeicherte Seriennummer eindeutig identifiziert werden kann. Die damit verbundenen Vorteile sind vielfältig. So kann ein Einwaagegefäss 100 einer damit durchgeführten Handlung jederzeit zugeordnet werden. Dadurch ist beispielsweise bei der Entsorgung nachvollziehbar, mit welchen Stoffen das Einwaagegefäss 100 kontaminiert sein könnte. Ferner können in dieses elektronische Speichermedium 150 auch die chemischen und physikalischen Eigenschaften des Einwaagegefässes 100 eingespeichert sein, so dass vor der Verwendung überprüft werden kann, ob dessen Material mit der Substanz oder mit dem Lösungsmittel kompatibel ist. Zudem können weitere Daten wie das Benutzungsdatum, die Stoffeigenschaften der Substanz, deren gewogene Masse, das zu verwendende Lösungsmittel, Angaben zu den weiteren Verarbeitungsschritten sowie Sicherheitsdaten, beispielsweise Angaben zum Benutzer, Klassifizierungen, Gefahrenhinweise und dergleichen mehr eingespeichert werden. Mithilfe dieser Daten können weitere Geräte gesteuert oder vorkonfiguriert werden. Es ist beispielsweise denkbar, dass eine in Figur 7 dargestellte Lösungsmittelpumpe 703 nur dann betrieben werden kann, wenn die im elektronischen Speichermedium 150 gespeicherten Daten in einer Prozessoreinheit 709 überprüft wurden und den Betrieb der Lösungsmittelpumpe 703 zulassen.

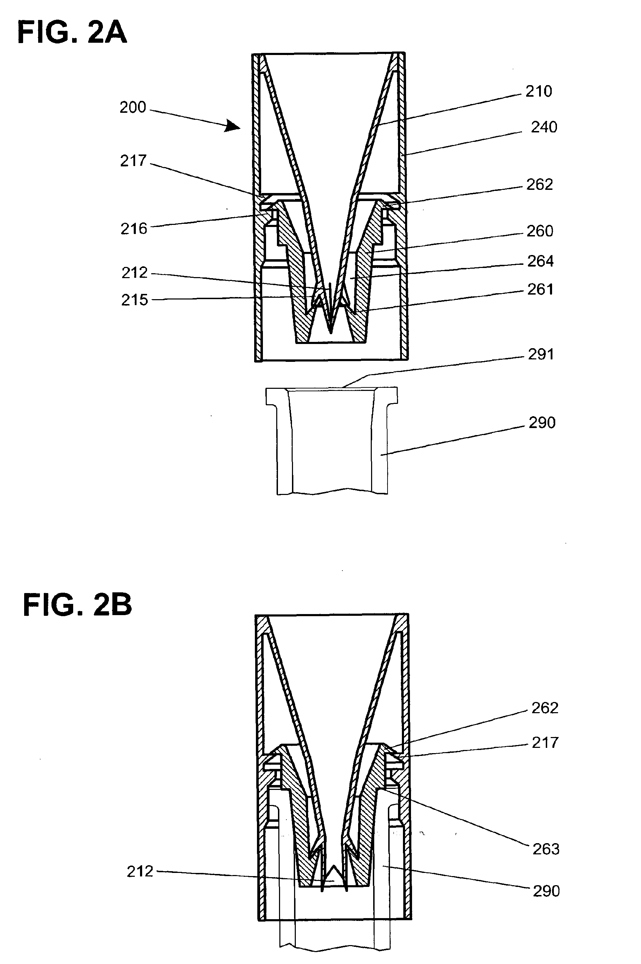

Figur 2A zeigt eine zweite Ausführung eines erfindungsgemässen Einwaagegefässes 200 in der Aufsicht und im Schnitt, mit einer sich beim Aufsetzen des Einwaagegefässes 200 auf ein Behältnis 290 öffnenden Auslassöffnung 212. Im Unterschied zum vorangehend beschriebenen Ausführungsbeispiel, wird die Auslassöffnung 212 des Einwaagegefässes 200 nicht primär durch seitliche Krafteinwirkung geöffnet, sondern mittels einer Aufreisshülse 260 durch einen Formschluss erzwungen.

Der rohrförmige Mantel 210 ist im Wesentlichen ähnlich ausgestaltet wie der Mantel des ersten Ausführungsbeispiels, jedoch mit dem Unterschied, dass an der Aussenseite des rohrförmigen Mantels 210 im Bereich von dessen Bodenpartie 211, mehrere Reisszungen 215 sternförmig angeordnet sind. Der rohrförmige Mantel 210 ist mit einem Standfuss 240 verbunden, beide Teile können aber auch einstückig miteinander verbunden sein. Im Innern des Standfusses 240 ist eine ringförmige Abstützung 216 und ein Einrastring 217 ausgebildet.

Die vorangehend erwähnte Aufreisshülse 260 ist innerhalb des Stützfusses 240 lose angeordnet, wobei die Bodenpartie 211 in deren Hülsenbohrung 264 hineinragt. Ein an der Aufreisshülse 260 ausgebildeter, gummielastischer Schnappring 262 ist mit der Abstützung 212 in Anlage, so dass die Aufreisshülse 260 in der Gebrauchslage des Einwaagegefässes 200 innerhalb des Stützfusses 240 gehalten ist und nicht hinausfällt.

Ferner ist in der Hülsenbohrung 264 ein hohlkegelstumpfförmig ausgebildeter Reissring 261 ausgebildet. Bei einer linearen Verschiebung der Aufreisshülse 260 relativ zum rohrförmigen Mantel 210 und entgegen der Schwerkraft, greift der Reissring 261 in die Reisszungen 215 ein. Diese werden während der Verschiebung durch die hohlkegelstumpfförmige Kontur des Reissrings 261, ausgehend von der Mittellängsachse des rohrförmigen Mantels 210, in horizontaler Richtung sternförmig auseinandergezogen, bis die Auslassöffnung 212 aufbricht. Dieser Zustand ist in der Figur 2B dargestellt. Ferner ist in der Figur 2B erkennbar, dass der Schnappring 262 am Einrastring 217 abstützt. Damit wird verhindert, dass sich die Auslassöffnung 212 jemals wieder schliesst. Einem einmal benutzten Einwaagegefäss 200 ist deshalb sofort anzusehen, dass es schon verwendet wurde.

Damit die Innenseite der Öffnung 291 des Behältnisses 290 nicht verschmutzt wird, ist die Aussenkontur der Aufreisshülse 260 derart ausgestaltet, dass die Aufreisshülse 260 weit in die Öffnung 291 hineinragt. Beim Aufsetzen des Einwaagegefässes 200 auf ein Behältnis 290 wird das Einwaagegefäss 200 an einem an der Aufreisshülse 260 ausgebildeten Bund 263 gegen das Behältnis 290 abgestützt.

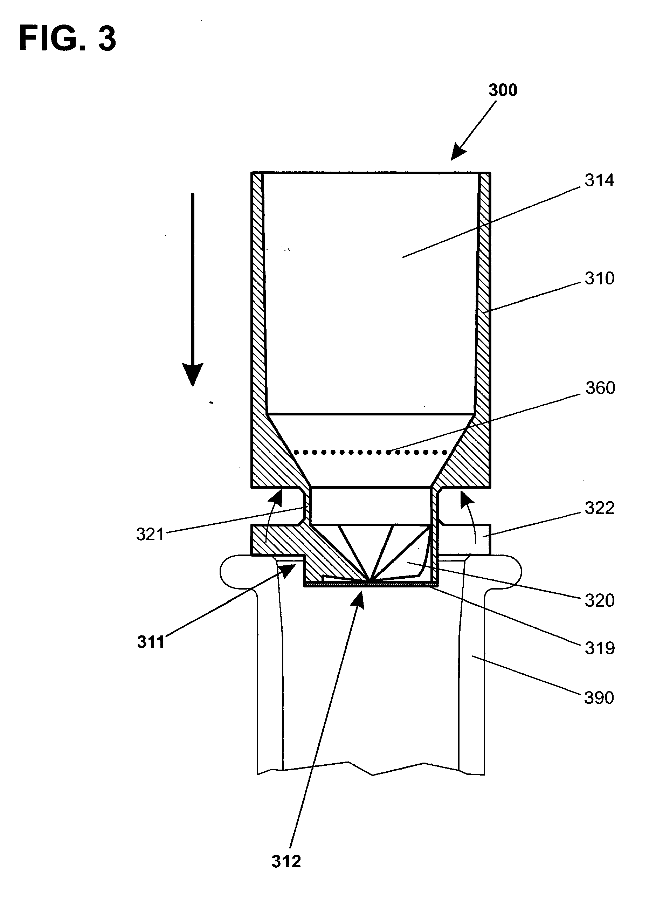

Figur 3 zeigt eine dritte Ausführung eines erfindungsgemässen Einwaagegefässes 300 in der Aufsicht und im Schnitt, mit einer sich beim Aufsetzen des Einwaagegefässes 300 auf ein Behältnis 390 öffnenden Auslassöffnung 312. Im Unterschied zu den vorangehend beschriebenen Ausführungsbeispielen, wird die Auslassöffnung 312 des Einwaagegefässes 300 durch eine Membrane 319 dicht verschlossen. Die Bodenpartie 311 des rohrförmigen Mantels 310 weist mehrere Aufbrechelemente 320 zum Aufbrechen der Membrane 319 auf. Jedes Aufbrechelement 320 ist durch ein Biegelager 321 schwenkbar mit dem rohrförmigen Mantel 310 verbunden. Zwecks Betätigung beziehungsweise Verschwenkens der Aufbrechelemente 320 ist für jedes Aufbrechelement 320 ein Hebelarm 322 vorhanden und mit diesem mechanisch gekoppelt. Eine Betätigung der Aufbrechelemente 320 und damit ein Zerreisen oder Aufbrechen der Membrane 319 erfolgt beim Aufsetzen des Einwaagegefässes 300 auf ein Behältnis 390, sobald die Hebelarme 322 am Rand des Behältnisses anstehen.

Im Innenraum 314 des Einwaagegefässes 300 ist ein Gittereinsatz 360 angeordnet, welcher beispielsweise grössere Substanzpartikel oder pastenförmige Substanzen zurückhält, so dass diese beim durchspülen gezielt mit dem Lösungsmittel bearbeitet werden können. Dies kann die Auflösungszeit beim nachfolgenden Verfahrensschritt des Lösens der Substanzen im Behältnis 390 entscheidend verkürzen. Der Gittereinsatz 360 kann selbstverständlich fest mit dem rohrförmigen Mantel 310 verbunden, aber auch einsetzbar beziehungsweise entfernbar ausgestaltet sein. An Stelle des Gittereinsatzes 360 können auch statische Mischerelemente, Filtereinsätze und dergleichen im Innenraum 314 angeordnet sein.

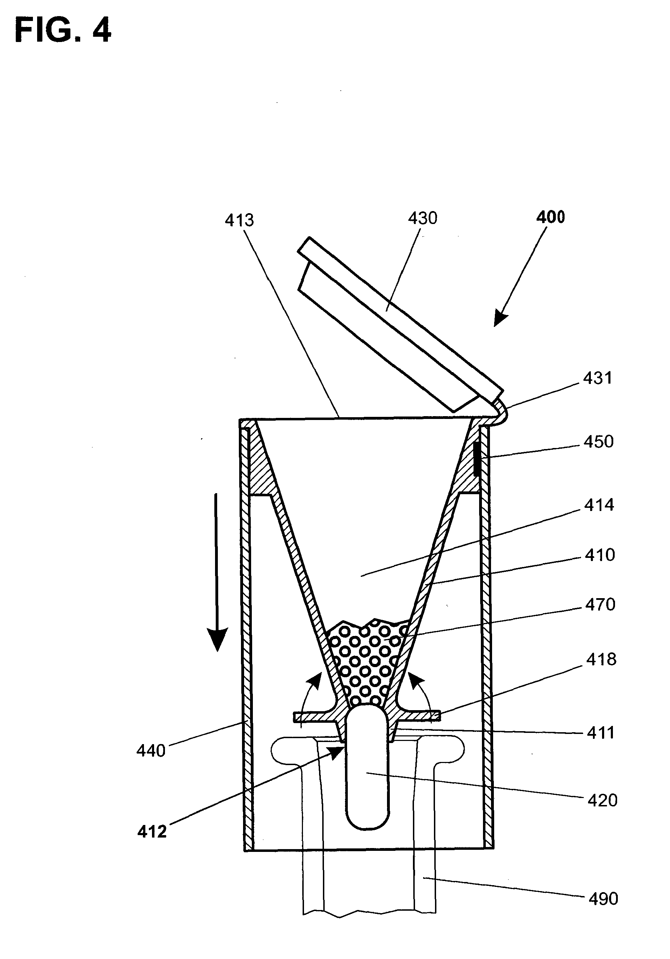

Figur 4 zeigt eine vierte Ausführung eines erfindungsgemässen Einwaagegefässes 400 in der Aufsicht und im Schnitt. Auch dieses weist einen rohrförmigen Mantel 410 und eine Bodenpartie 411 auf, welche einen Innenraum 414 umschliessen. Die in der Bodenpartie 411 angeordnete Auslassöffnung 412 wird bei dieser Ausführung durch einen Verschlusskörper 420 dicht verschlossen. Der Verschlusskörper 420 in diesem Beispiel ist ein Magnetstäbchen eines Magnetrührers. Vorzugsweise sind die chemischen und physikalischen Eigenschaften des Verschlusskörpers 420, beispielsweise dessen genaues Gewicht und Volumen, dessen Suszeptibilität, chemische Beständigkeit und dergleichen bekannt und gegebenenfalls am Einwaagegefäss 400 notiert oder sogar in einem am Einwaagegefäss 400 angeordneten elektronischen Speichermedium 450 (RFID-Tag) gespeichert. Dadurch kann beim Herstellen einer Lösung beispielsweise das Gewicht und/oder Volumen des Verschlusskörpers 420 beim Zuführen des Lösungsmittels berücksichtigt werden.

Die aus elastischem Material gefertigte Bodenpartie 411 weist einen umlaufenden Bund 418 auf. Durch die in der Figur 4 dargestellte, geeignete Anordnung des Bundes 418 im Bereich des Verschlusskörper-Endes, wird durch ein Aufstülpen des Bundes 418 in der angegebenen Pfeilrichtung die Auslassöffnung 412 aufgedehnt und der Verschlusskörper 420 fällt aus der Auslassöffnung 412 heraus. Dieses Aufstülpen erfolgt beim Aufsetzen des Einwaagegefässes 400 auf das mit dünner Linie angedeutete Behältnis 490.

Es kann durchaus vorkommen, dass nach dem Eindosieren einer Substanz 470 in den Innenraum 414, dieselbe nicht sogleich weiterverarbeitet werden soll. Deshalb kann wie in Figur 4 dargestellt, ein die Einfüllöffnung 413 des Einwaagegefässes 400 abschliessender, öffnenbarer und wieder verschliessbarer Verschlussdeckel 430 vorhanden sein. Wie dargestellt, ist dieser Verschlussdeckel 430 vorzugsweise mittels eines Scharniers 431 mit dem Einwaagegefäss 400 verbunden. Wie bereits in den Figuren 1 und 2 beschrieben, weist auch dieses Einwaagegefäss 400 einen Standfuss 440 auf.

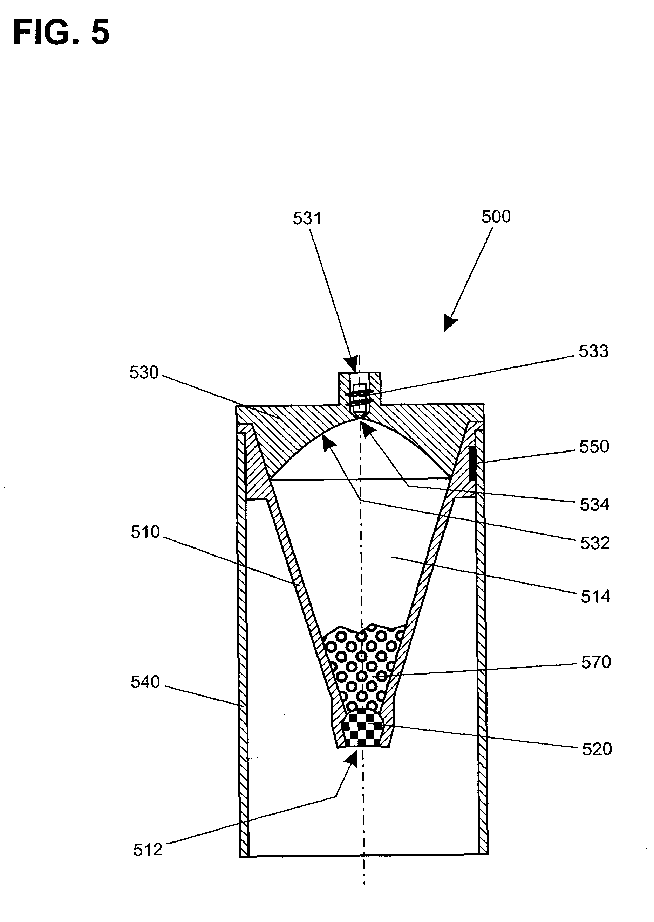

Selbstverständlich kann ein Verschlusskörper auch aus einem Material bestehen, welches durch ein Lösungsmittel aufgelöst werden kann. In Figur 5 wird ein Einwaagegefäss 500 in einer fünften Ausführung mit einem derartigen Verschlusskörper 520 gezeigt. Die eindosierte Substanz 570 wird nur solange im Einwaagegefäss 500 gehalten, bis ein Lösungsmittel den Verschlusskörper 520 auflöst. Eine Auflösung desselben kann beispielsweise dadurch geschehen, dass die mit dem Verschlusskörper 520 verstopfte Auslassöffnung 512 in ein teilweise mit Lösungsmittel gefülltes, in Figur 5 nicht dargestelltes Behältnis eingetaucht wird. Sobald sich der Verschlusskörper 520 aufgelöst hat, wird auch die Substanz 570 mindestens teilweise aufgelöst und fällt in das Behältnis. Selbstverständlich kann auch Lösungsmittel in den Innenraum 514 eingebracht werden und der Verschlusskörper 520 vom Innenraum 514 her aufgelöst werden.

Die Figur 5 zeigt ferner eine weitere Ausführung eines Verschlussdeckels 530. Dieser weist eine glockenförmige Innenkontur 532 und einen Anschluss 531 auf. Durch den Anschluss 531 ist Lösungsmittel einer im Verschlussdeckel 530 ausgebildeten Düse 534 zuführbar. Damit mittels der Düse 534 im Innenraum 514 ein ausreichend aufplatzender Sprühnebel erzeugt werden kann, welcher die glockenförmige Innenkontur 532 flächendeckend abduscht, weist die Düse 534 einen Düseneinsatz 533 auf, durch welchen das einströmende Lösungsmittel in Rotation versetzt wird. Selbstverständlich kann der Anschluss mit weiteren Armaturen, beispielsweise mit Ventilen bestückt sein, mit welchen der Lösungsmitteleintrag steuer- und regelbar ist.

Der Verschlussdeckel 530 kann in der Art einer Steckverbindung mit dem rohrförmigen Mantel 510 oder mit dem Standfuss 540 des Einwaagegefässes 500 verbunden sein, aber auch mit einer Schnappverbindung oder Schraubverbindung. Vorzugsweise sind auch bei dieser Ausführung die chemischen und physikalischen Eigenschaften des Verschlusskörpers 520, beispielsweise dessen genaues Gewicht und Volumen, die chemische Zusammensetzung und dergleichen bekannt und gegebenenfalls am Einwaagegefäss 500 notiert oder sogar in einem am Einwaagegefäss 500 angeordneten elektronischen Speichermedium 550 (RFID-Tag) gespeichert. Dadurch kann beim Herstellen einer Lösung beispielsweise das Gewicht und/oder Volumen des Verschlusskörpers 520 sowie die Wahl des Lösungsmittels berücksichtigt werden.

Figur 6 zeigt in schematischer Darstellung eine Dosiervorrichtung 601 mit einer auswechselbaren Dosiereinheit 602 und mit einer Waage 603. Auf der Waagschale 604 der Waage 603 ist ein erfindungsgemässes Einwaagegefäss 600 aufgelegt. Die Dosiereinheit 602 weist ein elektronisches Speichermedium 605, beispielsweise einen RFID-Tag oder einen über Anschlussleitungen verbindbaren Speicherchip auf. Die Dosiervorrichtung 601 weist eine Lese-Schreibvorrichtung, beziehungsweise eine Empfänger-Sendeeinheit auf, mittels welcher der Informationstransfer durchführbar ist. Die Elemente für den Informationstransfer sind aus dem Stand der Technik bekannt und sind in Figur 6 schematisch durch die Signalpfade 606, 607, 608 sowie durch die Prozessoreinheit 609 dargestellt. Die Pfeilrichtung der Signalpfade 606, 607, 608 gibt an, wohin Daten beziehungsweise Informationen übertragen werden. Aus dieser Anordnung ist auch ersichtlich, dass gemäss dem Signalpfad 607 weitere Daten wie beispielsweise das durch die Waage 603 ermittelte Gewicht der eindosierten Substanz und das Taragewicht des Einwaagegefässes 600 auf das elektronische Speichermedium 650 des Einwaagegefässes 600 übertragen werden können.

Alternativ kann die Dosiereinheit 600 auch ein maschinenlesbares Kennzeichnungsfeld aufweisen. Das maschinenlesbare Kennzeichnungsfeld kann mit Fliesstext, aber auch mit einem Barcode oder einem Matrixcode versehen sein.

Dementsprechend muss die Dosiervorrichtung 601 ein optisches Lesegerät aufweisen, um einen Informationstransfer zu ermöglichen. Sofern die Informationen wiederum auf ein am Entnahmegefäss 600 angeordnetes Kennzeichnungsfeld übertragen werden sollen, muss auch eine Druckervorrichtung vorhanden sein.

Das dem Eindosieren nachfolgende Durchspülen eines mit Substanz befüllten Einwaagegefässes 700 wird vorzugsweise mittels einer, in Figur 7 schematisch dargestellten Durchspülvorrichtung 701 durchgeführt. Sofern die Durchspülvorrichtung 701 wie dargestellt, eine Waage 707 mit einer Waagschale 708 aufweist, kann zuerst das Taragewicht eines Behältnisses 790 ermittelt werden. Anschliessend wird das befüllte Einwaagegefäss 700 auf das Behältnis 790 gesteckt, so dass die Auslassöffnung 712 geöffnet ist. Je nach Waage 707, kann dieser Vorgang auf der Waagschale 708 durchgeführt werden oder nicht. Durch die geöffnete Auslassöffnung kann bereits ein grosser Teil der Substanz in das Behältnis 790 hinein fallen.

Die Durchspülvorrichtung 701 weist einen Lösungsmitteltank 702, eine Lösungsmittelpumpe 703 und eine Auslassdüse 704 auf, welche auf die Einfüllöffnung 713 des Einwaagegefässes 700 gerichtet ist. Sobald die Lösungsmittelpumpe 703 aktiviert wird, wird Lösungsmittel aus dem Lösungsmitteltank 702 zur Auslassdüse 704 gefördert und mit dem Lösungsmittel das Einwaagegefäss 700 durchgespült, so dass keine Substanz im Einwaagegefäss 700 verbleibt.

Die aus dem elektronischen Speichermedium 750 des Einwaagegefässes 700 über den Signalpfad 716 ausgelesenen Daten werden in der Prozessoreinheit 709 verarbeitet. Sofern eine Arbeitsanweisung mit eingelesen wurde, beispielsweise wie viel Lösungsmittel hinzugesetzt werden soll, wird diese Information in Form von Steuersignalen über den Signalpfad 717 an die Lösungsmittelpumpe 703 weitergeleitet. Die hinzugesetzte Lösungsmittelmenge kann auch mit Hilfe der Waage 707 ermittelt werden, wobei deren Wägesignal über einen Signalpfad 719 an die Prozessoreinheit 709 übermittelt wird. Aus den vorhandenen Daten kann hernach die genaue Konzentration der Lösung errechnet werden. Selbstverständlich kann das Wägesignal auch zur Steuerung der Lösungsmittelpumpe 717 herangezogen werden.

Ferner ist beispielsweise denkbar, dass die Lösungsmittelpumpe 703 nur dann betrieben werden kann, wenn die im elektronischen Speichermedium 750 gespeicherten Daten in der Prozessoreinheit 709 überprüft wurden und den Betrieb der Lösungsmittelpumpe 703 zulassen. Gegebenenfalls hat die Durchspülvorrichtung 701 mehrere Lösungsmitteltanks und Lösungsmittelpumpen, so dass aufgrund der Informationen aus dem elektronischen Speichermedium 750 die richtige Lösungsmittelpumpe 703 ausgewählt und in Betrieb gesetzt werden kann.

Damit die Informationen aber auch physisch mit der zubereiteten Lösung verbunden sind, kann das Behältnis 790 eine Manschette 706 aufweisen, welche ihrerseits eine elektronische Speichereinheit 705 beinhaltet. Über den Signalpfad 718 können nun alle relevanten Informationen an diese elektronische Speichereinheit 705 übertragen werden.

Selbstverständlich kann der vorangehende Informations- und Datentransfer auch mittels optischen Lesegeräten, Kennzeichnungsfeldern und Druckern durchgeführt werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. So kann selbstverständlich jedes der in den Figuren 1 bis 5 beschriebenen Einwaagegefässe in den Vorrichtungen, wie sie schematisch in den Figuren 6 und 7 beschrieben wurden, verwendet werden. Insbesondere sind weitere Ausführungen denkbar, die den Erfindungsgegenstand beinhalten, beispielsweise wenn die Aufbrechelemente aus Figur 3 über Sollbruchstellen miteinander verbunden sind und sich eine Membrane dadurch erübrigt. Selbstverständlich können alle Ausführungsbeispiele einen Verschlussdeckel zum Verschliessen der Einfüllöffnung aufweisen. Jeder Verschlussdeckel kann ferner einen Anschluss zum Einbringen eines Fluids wie Gas oder Lösungsmittel in den Innenraum aufweisen, so dass Substanzen auch unter hohem Duck aus dem Einwaagegefäss herausgespült werden können.

### Bezugszeichenliste

- 700, 600, 500, 400, 300, 200, 100: Einwaagegefäss
- 410, 310, 210, 110: rohrförmiger Mantel
- 411,311,211, 111: Bodenpartie
- 712,212, 112: schlitzförmige Auslassöffnung / Sollbruchstelle
- 713, 413, 113: Einfüllöffnung
- 514,414,314,114: Innenraum
- 440, 240, 140: Standfuss
- 141: Abdeckfolie
- 750, 705, 650, 605, 550, 450, 150: elektronisches Speichermedium
- 790, 490, 390, 290, 190: Behältnis
- 215: Reisszunge
- 216: ringförmige Abstützung
- 217: Einrastring
- 260: Aufreisshülse
- 261: Reissring
- 262: Schnappring
- 263: Bund
- 264: Hülsenbohrung
- 291: Öffnung
- 512, 412, 312: Auslassöffnung
- 319: Membrane
- 320: Aufbrechelement
- 321: Biegelager
- 322: Hebelarm
- 360: Gittereinsatz
- 418: umlaufender Bund
- 520, 420: Verschlusskörper
- 530, 430: Verschlussdeckel
- 431: Scharnier
- 570, 470: Substanz
- 531: Anschluss
- 532: glockenförmige Innenkontur
- 533: Düseneinsatz
- 534: Düse
- 601: Dosiervorrichtung
- 602: Dosiereinheit
- 707, 603: Waage
- 708, 604: Waagschale
- 719, 718, 717, 716, 608, 607, 606: Signalpfad
- 709, 609: Prozessoreinheit
- 701: Durchspülvorrichtung
- 702: Lösungsmitteltank
- 703: Lösungsmittelpumpe
- 704: Auslassdüse
- 706: Manschette

## Patentansprüche

1. Einwaagegefäss (100, 200, 300, 400, 500, 600, 700) zum Einwägen von fliessfähigen Substanzen (470, 570), welches eine Einfüllöffnung (113, 413, 713), einen rohrförmigen Mantel (110, 210, 310, 410) und eine Bodenpartie (111, 211, 311, 411) aufweist, wobei die Bodenpartie (111, 211, 311, 411) mit dem rohrförmigen Mantel (110, 210, 310, 410) verbunden ist und den rohrförmigen Mantel (110, 210, 310, 410) in Gebrauchslage in der Schwerkraftrichtung dicht abschliesst, **dadurch gekennzeichnet, dass** die Bodenpartie (111, 211, 311, 411), durch eine äussere Krafteinwirkung auf das Einwaagegefäss (100, 200, 300, 400, 500, 600, 700) und/oder durch die Einwirkung eines Lösungsmittels auf das Einwaagegefäss (100, 200, 300, 400, 500, 600, 700) eine Auslassöffnung (112, 212, 312, 412, 512, 712) bildend, öffnenbar ist, so dass bei geöffneter Auslassöffnung (112, 212, 312, 412, 512, 712) das Einwaagegefäss(100, 200, 300, 400, 500, 600, 700) mit einem Lösungsmittel durchspülbar ist und die Auslassöffnung (112, 212, 712) eine unter seitlicher Krafteinwirkung aufbrechbare, schlitzförmig ausgebildete Sollbruchstelle aufweist.

2. Einwaagegefäss (100, 200, 300, 400, 500, 600, 700) nach Anspruch 1, **dadurch gekennzeichnet, dass** die äussere Krafteinwirkung mittels des Aufsetzens des Einwaagegefässes (100, 200, 300, 400, 500, 600, 700) auf eine Einlassöffnung eines Behältnisses (190, 290, 390, 490, 790) erzeugbar ist.

3. Einwaagegefäss (100, 200, 300, 400, 500, 600, 700) nach Anspruch 1 oder 2, **dadurch gekennzeichnet, dass** mindestens ein Teil der Bodenpartie (111, 211, 311, 411) aus einem gummielastischen Material besteht.

4. Einwaagegefäss (100, 200, 300, 400, 500, 600, 700) nach einem der Ansprüche 1 bis 3, **dadurch gekennzeichnet, dass** die Bodenpartie (111, 211, 311, 411) einen Verschlusskörper (420, 520) aufweist, der durch die äussere Krafteinwirkung entfernbar und/oder durch das Lösungsmittel auflösbar ist.

5. Einwaagegefäss (100, 200, 300, 400, 500, 600, 700) nach Anspruch 4, **dadurch gekennzeichnet, dass** der Verschlusskörper (420, 520) ein Magnetstäbchen eines Magnetrührers ist.

6. Einwaagegefäss (100, 200, 300, 400, 500, 600, 700) nach einem der Ansprüche 1 bis 5, **dadurch gekennzeichnet, dass** nach dem Aufbrechen der Sollbruchstelle eine sich unter seitlicher Krafteinwirkung öffnende und sich variabel erweiternde Auslassöffnung (112, 212, 712) beziehungsweise infolge einer seitlichen Entlastung sich variabel schliessende Auslassöffnung (112, 212, 712) vorhanden ist.

7. Einwaagegefäss (100, 200, 300, 400, 500, 600, 700) nach einem der Ansprüche 1 bis 6, **dadurch gekennzeichnet, dass** das Einwaagegefäss (100, 200, 300, 400, 500, 600, 700) ferner Mittel zur Erzeugung einer seitlichen Krafteinwirkung und/oder von Scherkräften und/oder von Aufreisskräften (215, 260, 261) aufweist.

8. Einwaagegefäss (100, 200, 300, 400, 500, 600, 700) nach einem der Ansprüche 1 bis 7, **dadurch gekennzeichnet, dass** eine Einrastvorrichtung (217, 262) vorhanden ist, welche die Auslassöffnung (112, 212, 312, 412, 512, 712) nach dem Aufsetzen auf ein Behältnis (190, 290, 390, 490, 790) irreversibel geöffnet hält.

9. Einwaagegefäss (100, 200, 300, 400, 500, 600, 700) nach einem der Ansprüche 1 bis 8, **dadurch gekennzeichnet, dass** im Bereich der Auslassöffnung (112, 212, 312, 412, 512, 712) ein Gitter (360), eine Membrane, statische Mischerelemente oder ein Filtereinsatz angeordnet ist.

10. Einwaagegefäss (100, 200, 300, 400, 500, 600, 700) nach einem der Ansprüche 1 bis 9, **dadurch gekennzeichnet, dass** die der Substanz (470, 570) zugewandten Innenflächen des rohrförmigen Mantels (110, 210, 310, 410), der Bodenpartie (111, 211, 311, 411) und der Auslassöffnung (112, 212, 312, 412, 512, 712) eine glatte und/oder beschichtete Oberfläche aufweisen.

11. Einwaagegefäss (100, 200, 300, 400, 500, 600, 700) nach einem der Ansprüche 1 bis 10, **dadurch gekennzeichnet, dass** dieses zumindest einen Standfuss (140, 240, 440) aufweist.

12. Einwaagegefäss (100, 200, 300, 400, 500, 600, 700) nach einem der Ansprüche 1 bis 11, **dadurch gekennzeichnet, dass** ein die Einfüllöffnung (113, 413, 713) abschliessender, öffnenbarer und wieder verschliessbarer Verschlussdeckel (430, 530) vorhanden ist.

13. Einwaagegefäss (100, 200, 300, 400, 500, 600, 700) nach Anspruch 12, **dadurch gekennzeichnet, dass** der Verschlussdeckel (430, 530) einen Anschluss (531) zum Einbringen eines Fluids wie Gas oder Lösungsmittel aufweist.

14. Einwaagegefäss (100, 200, 300, 400, 500, 600, 700) nach einem der Ansprüche 1 bis 13, **dadurch gekennzeichnet, dass** dieses ein elektronisches Speichermedium (150, 450, 550, 650, 750) zum speichern von Informationen und/oder ein maschinenlesbares Kennzeichnungsfeld aufweist.

15. Verfahren zur Herstellung einer Lösung mit einer Dosiervorrichtung (601), einer Waage (603), einem Behältnis (190, 290, 390, 490, 790) und einem Einwaagegefäss (100, 200, 300, 400, 500, 600, 700) nach einem der Ansprüche 1 bis 15, **dadurch gekennzeichnet, dass**
• in einem ersten Schritt ein neuwertiges, unbenutztes Einwaagegefäss (100, 200, 300, 400, 500, 600, 700) auf eine Waagschale (604) der Waage (603) aufgebracht wird,
• dass einem zweiten Schritt die Waage (603) tariert wird,
• dass in einem dritten Schritt mittels der Dosiervorrichtung (601) eine fliessfähige Substanz (470, 570) in vorgegebener Menge durch die Einfüllöffnung (113, 413, 713) in das Einwaagegefäss (100, 200, 300, 400, 500, 600, 700) eindosiert wird,
• dass in einem vierten Schritt das Einwaagegefäss (100, 200, 300, 400, 500, 600, 700) von der Waagschale (604) entfernt und auf eine Einlassöffnung des Behältnisses (190, 290, 390, 490, 790) aufgesetzt wird,
• dass in einem fünften Schritt die Auslassöffnung (112, 212, 312, 412, 512, 712) unter einer Krafteinwirkung geöffnet wird beziehungsweise dass unter
• Einbringung eines Fluids der auflösbare Verschlusskörper (520) aufgelöst wird,
• dass in einem sechsten Schritt unter Einbringung eines Fluids das Einwaagegefäss (100, 200, 300, 400, 500, 600, 700) durchgespült wird, so dass die gesamte Substanzmenge aus dem Einwaagegefäss (100, 200, 300, 400, 500, 600, 700) in das Behältnis (190, 290, 390, 490, 790) gespült wird.

16. Verfahren nach Anspruch 15, **gekennzeichnet durch** ein Einwaagegefäss (100, 200, 300, 400, 500, 600, 700) mit einem elektronischen Speichermedium (150, 450, 550, 650, 750) und **gekennzeichnet durch** die weiteren Schritte,
• dass zwischen dem dritten und dem vierten Schritt Informationen zur Substanz, welche gegebenenfalls in der Dosiervorrichtung (601) oder in einem, an dem Vorratsbehälter (602) angeordneten Speichermedium (605), aus welchem die Substanz (470, 570) entnommen wurde, gespeichert sind, sowie gegebenenfalls Informationen zum Dosiervorgang in das elektronische Speichermedium (150, 450, 550, 650, 750) des Einwaagegefässes (100, 200, 300, 400, 500, 600, 700) eingespeichert und/oder in das Kennzeichnungsfeld des Einwaagegefässes (100, 200, 300, 400, 500, 600, 700) geschrieben werden und
• dass nach dem sechsten Schritt die im elektronischen Speichermedium (150, 450, 550, 650, 750) des Einwaagegefässes (100, 200, 300, 400, 500, 600, 700) eingespeicherten und/oder in dessen Kennzeichnungsfeld eingetragenen Informationen auf ein am Behältnis (190, 290, 390, 490, 790) angeordnetes elektronisches Speichermedium (705) eingespeichert und/oder in ein Kennzeichnungsfeld des Behältnisses (190, 290, 390, 490, 790) übertragen werden.

## Claims

1. Weighing receptacle (100, 200, 300, 400, 500, 600, 700) for the weighing-in of free-flowing substances (470, 570), comprising a fill opening (113, 413, 713), a tubular-shaped circumference wall (110, 210, 310, 410) and a bottom part (111, 211, 311, 411), wherein the bottom part (111, 211, 311, 411) is connected to the tubular-shaped circumference wall (110, 210, 310, 410) and, when in operating position, tightly closes off the tubular-shaped circumference wall (110, 210, 310, 410) in the direction of gravity, **characterized in that** the bottom part (111, 211, 311, 411) can be opened by an outside force acting on the weighing receptacle (100, 200, 300, 400, 500, 600, 700) and/or by a solvent acting on the weighing receptacle (100, 200, 300, 400, 500, 600, 700) in such a way that an outlet orifice (112, 212, 312, 412, 512, 712) is formed, so that when the outlet orifice (112, 212, 312, 412, 512, 712) is in its open state, the weighing receptacle (100, 200, 300, 400, 500, 600, 700) can be flushed out with a solvent and the outlet orifice (112, 212, 712) comprises a location of intentional breakage configured as a slit and designed to break open in response to a laterally acting force.

2. Weighing receptacle (100, 200, 300, 400, 500, 600, 700) according to claim 1, **characterized in that** said outside force can be generated by the act of setting the weighing receptacle (100, 200, 300, 400, 500, 600, 700) onto an inlet opening of a receiving container (190, 290, 390, 490, 790).

3. Weighing receptacle (100, 200, 300, 400, 500, 600, 700) according to claim 1 or 2, **characterized in that** at least a portion of the bottom part (111, 211, 311, 411) consists of a rubber-elastic material.

4. Weighing receptacle (100, 200, 300, 400, 500, 600, 700) according to one of the claims 1 to 3, **characterized in that** the bottom part (111, 211, 311, 411) comprises a closure body (420, 520) which can be removed by the action of the outside force and/or dissolved by the solvent.

5. Weighing receptacle (100, 200, 300, 400, 500, 600, 700) according to claim 4, **characterized in that** the closure body (420, 520) is a magnet bar of a magnetic stirrer.

6. Weighing receptacle (100, 200, 300, 400, 500, 600, 700) according to one of the claims 1 to 5, **characterized in that** after the location of intentional breakage is broken open, there is an outlet orifice (112, 212, 712) in place which under a lateral force opens up to a variable width and also closes itself to a variable degree when the lateral force is reduced.

7. Weighing receptacle (100, 200, 300, 400, 500, 600, 700) according to one of the claims 1 to 6, **characterized in that** the weighing receptacle (100, 200, 300, 400, 500, 600, 700) further comprises means (215, 260, 261) for producing a laterally acting force and/or shear forces and/or ripping forces.

8. Weighing receptacle (100, 200, 300, 400, 500, 600, 700) according to one of the claims 1 to 7, **characterized in that** said weighing receptacle comprises a retainer catch (217, 262) serving to keep the outlet orifice (112, 212, 312, 412, 512, 712) irreversibly in the open state after said weighing receptacle has been set onto a receiving container (190, 290, 390, 490, 790).

9. Weighing receptacle (100, 200, 300, 400, 500, 600, 700) according to one of the claims 1 to 8, **characterized in that** a screening sieve (360), a membrane, static mixer elements, or a filter insert is arranged in the area of the outlet orifice (112, 212, 312, 412, 512, 712).

10. Weighing receptacle (100, 200, 300, 400, 500, 600, 700) according to one of the claims 1 to 9, **characterized in that** the insides of the tubular-shaped circumference wall (110, 210, 310, 410), of the bottom part (111, 211, 311, 411) and of the outlet orifice (112, 212, 312, 412, 512, 712) which face towards the substance (470, 570) have a smooth and/or coated surface.

11. Weighing receptacle (100, 200, 300, 400, 500, 600, 700) according to one of the claims 1 to 10, **characterized in that** said weighing receptacle comprises at least one support pedestal (140, 240, 440).

12. Weighing receptacle (100, 200, 300, 400, 500, 600, 700) according to one of the claims 1 to 11, **characterized in that** said weighing receptacle comprises a closure lid (430, 530) which closes up the fill opening (113, 413, 713) and which is designed so that it can be opened and reclosed.

13. Weighing receptacle (100, 200, 300, 400, 500, 600, 700) according to claim 12, **characterized in that** the closure lid (430, 530) has an inlet connector (531) for fluids such as gas or solvent agents.

14. Weighing receptacle (100, 200, 300, 400, 500, 600, 700) according to one of the claims 1 to 13, **characterized in that** said weighing receptacle comprises an electronic storage medium (150, 450, 550, 650, 750) serving to store information and/or comprises a machine-readable identification field.

15. Method of preparing a solution with a dosage-dispensing device (601), a balance (603), a receiving container (190, 290, 390, 490, 790) and a weighing receptacle (100, 200, 300, 400, 500, 600, 700) according to one of the claims 1 to 15, **characterized in that**
- in a first step, a new and unused weighing receptacle (100, 200, 300, 400, 500, 600, 700) is placed on a weighing pan (604) of the balance (603),
- in a second step, the balance is tared,
- in a third step, a prescribed quantity of a free-flowing substance (470, 570) is dispensed by means of the dosage-dispensing device (601) through the fill opening (113, 413, 713) into the weighing receptacle (100, 200, 300, 400, 500, 600, 700),
- in a fourth step, the weighing receptacle (100, 200, 300, 400, 500, 600, 700) is removed from the weighing pan (604) and set on an inlet opening of the receiving container (190, 290, 390, 490, 790),
- in a fifth step, the outlet orifice (112, 212, 312, 412, 512, 712) is opened by the action of a force, or by introducing a fluid which dissolves the soluble closure body (520), and
- in a sixth step the weighing receptacle (100, 200, 300, 400, 500, 600, 700) is flushed out by injecting a fluid, so that the entire substance quantity is flushed from the weighing receptacle (100, 200, 300, 400, 500, 600, 700) into the receiving container (190, 290, 390, 490, 790).

16. Method according to claim 15, **characterized in that** the weighing receptacle (100, 200, 300, 400, 500, 600, 700) comprises an electronic storage medium (150, 450, 550, 650, 750), and further **characterized in that**
- between the third and fourth steps, information that is related to the substance and may be stored in the dosage-dispensing device (601) or in an electronic storage medium (605) arranged on a supply container (602) from which the substance (470, 570) was taken, as well as information related to the dosage preparation process, is saved in the electronic storage medium (150, 450, 550, 650, 750) of the weighing receptacle (100, 200, 300, 400, 500, 600, 700) and/or written into the identification field of the weighing receptacle (100, 200, 300, 400, 500, 600, 700), and
- after the sixth step, the information that was saved in the electronic storage medium (150, 450, 550, 650, 750) of the weighing receptacle (100, 200, 300, 400, 500, 600, 700) and/or written into the identification field of said weighing receptacle is saved in an electronic storage medium (705) that is arranged on the receiving container (190, 290, 390, 490, 790) and/or is transferred to an identification field of the receiving container (190, 290, 390, 490, 790).

## Revendications

1. Récipient de pesée (100, 200, 300, 400, 500, 600, 700) pour le pesage de substances fluides (470, 570), comportant un orifice de remplissage (113, 413, 713), une enveloppe tubulaire (110, 210, 310, 410) et une partie de fond (111, 211, 311, 411), dans lequel la partie de fond (111, 211, 311, 411) est reliée à l'enveloppe tubulaire (110, 210, 310, 410) et ferme de façon étanche l'enveloppe tubulaire (110, 210, 310, 410) en direction du centre de gravité dans la position d'utilisation, **caractérisé en ce que** la partie de fond (111, 211, 311, 411) peut être ouverte en formant un orifice de sortie (112, 212, 312, 412, 512, 712) par l'action d'une force extérieure sur le récipient de pesée (100, 200, 300, 400, 500, 600, 700) et/ou par l'action d'un solvant sur le récipient de pesée (100, 200, 300, 400, 500, 600, 700), de sorte que lorsque l'orifice de sortie (112, 212, 312, 412, 512, 712) est ouvert, le récipient de pesée (100, 200, 300, 400, 500, 600, 700) peut être traversé par un solvant et l'orifice de sortie (112, 212, 712) comporte une zone de rupture privilégiée formée comme une fente, apte à être rompue sous l'action d'une force latérale.

2. Récipient de pesée (100, 200, 300, 400, 500, 600, 700) selon la revendication 1, **caractérisé en ce que** l'action de la force extérieure peut être produite en montant le récipient de pesée (100, 200, 300, 400, 500, 600, 700) sur un orifice d'entrée d'un conteneur (190, 290, 390, 490, 790).

3. Récipient de pesée (100, 200, 300, 400, 500, 600, 700) selon la revendication 1 ou 2, **caractérisé en ce qu'**au moins une partie de la partie de fond (111, 211, 311, 411) est constituée d'un matériau élastique.

4. Récipient de pesée (100, 200, 300, 400, 500, 600, 700) selon l'une des revendications 1 à 3, **caractérisé en ce que** la partie de fond (111, 211, 311, 411) comporte un corps de fermeture (420, 520) apte à être retiré par l'action de la force extérieure et/ou dissolu par le solvant.

5. Récipient de pesée (100, 200, 300, 400, 500, 600, 700) selon la revendication 4, **caractérisé en ce que** le corps de fermeture (420, 520) est une tige magnétique ou un agitateur magnétique.

6. Récipient de pesée (100, 200, 300, 400, 500, 600, 700) selon l'une des revendications 1 à 5, **caractérisé en ce qu'**après la rupture de la zone de rupture privilégiée, il apparaît un orifice de sortie à élargissement variable (112, 212, 712) s'ouvrant sous l'action d'une force latérale, ou un orifice de sortie à fermeture variable (112, 212, 712) suite à une décharge latérale.

7. Récipient de pesée (100, 200, 300, 400, 500, 600, 700) selon l'une des revendications 1 à 6, **caractérisé en ce que** le récipient de pesée (100, 200, 300, 400, 500, 600, 700) comporte en outre des moyens pour la production d'une action de force latérale et/ou de forces de cisaillement et/ou de forces de déchirement (251, 260, 261).

8. Récipient de pesée (100, 200, 300, 400, 500, 600, 700) selon l'une des revendications 1 à 7, **caractérisé en ce qu'**il est prévu un dispositif à enclenchement (217, 262) maintenant l'orifice de sortie (112, 212, 312, 412, 512, 712) ouvert de façon irréversible après le montage sur un conteneur (190, 290, 390, 490, 790).

9. Récipient de pesée (100, 200, 300, 400, 500, 600, 700) selon l'une des revendications 1 à 8, **caractérisé en ce qu'**une grille (360), une membrane, des éléments de mélange statiques ou un insert de filtre sont agencés dans la région de l'orifice de sortie (112, 212, 312, 412, 512, 712).

10. Récipient de pesée (100, 200, 300, 400, 500, 600, 700) selon l'une des revendications 1 à 9, **caractérisé en ce que** les surfaces intérieures de l'enveloppe tubulaire (110, 210, 310, 410), de la partie de fond (111, 211, 311, 411) et de l'orifice de sortie (112, 212, 312, 412, 512, 712) qui sont tournées vers la substance (470, 570) présentent une surface lisse et/ou revêtue.

11. Récipient de pesée (100, 200, 300, 400, 500, 600, 700) selon l'une des revendications 1 à 10, **caractérisé en ce que** celui-ci comporte au moins un pied de support (140, 240, 440).

12. Récipient de pesée (100, 200, 300, 400, 500, 600, 700) selon l'une des revendications 1 à 11, **caractérisé en ce qu'**il est prévu un couvercle de fermeture (430, 530) ouvrable et refermable, fermant l'orifice de remplissage (113, 413, 713).

13. Récipient de pesée (100, 200, 300, 400, 500, 600, 700) selon la revendication 12, **caractérisé en ce que** le couvercle de fermeture (430, 530) comporte un raccord (531) pour l'insertion d'un fluide tel que du gaz ou un solvant.

14. Récipient de pesée (100, 200, 300, 400, 500, 600, 700) selon l'une des revendications 1 à 13, **caractérisé en ce que** celui-ci comporte un moyen d'enregistrement électronique (150, 450, 550, 650, 750) pour l'enregistrement d'informations et/ou un champ d'identification lisible par machine.

15. Procédé pour la fabrication d'une solution avec un dispositif de dosage (601), une balance (603), un conteneur (190, 290, 390, 490, 790) et un récipient de pesée (100, 200, 300, 400, 500, 600, 700) selon l'une des revendications 1 à 15, **caractérisé en ce que**
• au cours d'une première étape, un récipient de pesée (100, 200, 300, 400, 500, 600, 700) non utilisé est placé sur un plateau de pesée (604) de la balance (603),
• au cours d'une deuxième étape, la balance (603) est tarée,
• au cours d'une troisième étape, une substance fluide (470, 570) est dosée selon une quantité prédéfinie dans le récipient de pesée (100, 200, 300, 400, 500, 600, 700) à travers l'orifice de remplissage (113, 413, 713), au moyen du dispositif de dosage (601),
• au cours d'une quatrième étape, le récipient de pesée (100, 200, 300, 400, 500, 600, 700) est éloigné du plateau de pesée (604) et placé sur un orifice d'entrée du conteneur (190, 290, 390, 490, 790),
• au cours d'une cinquième étape, l'orifice de sortie (112, 212, 312, 412, 512, 712) est ouvert sous l'action d'une force, ou **en ce que** le corps de fermeture (520) soluble est dissolu par l'introduction d'un fluide,
• au cours d'une sixième étape, le récipient de pesée (100, 200, 300, 400, 500, 600, 700) est rincé en introduisant un fluide, de sorte que le volume total de la substance est transféré du récipient de pesée (100, 200, 300, 400, 500, 600, 700) vers le conteneur (190, 290, 390, 490, 790).

16. Procédé selon la revendication 15, **caractérisé par** un récipient de pesée (100, 200, 300, 400, 500, 600, 700) avec un moyen d'enregistrement électronique (150, 450, 550, 650, 750) et **caractérisé par** les étapes supplémentaires suivantes :
• entre la troisième et la quatrième étape, des informations concernant la substance, enregistrées le cas échéant dans le dispositif de dosage (601) ou dans un moyen de stockage (605) agencé sur le réservoir (602), à partir duquel la substance (470, 570) a été extraite, et, le cas échéant, des informations concernant l'opération de dosage, sont enregistrées dans le moyen d'enregistrement électronique (150, 450, 550, 650, 750) du récipient de pesée (100, 200, 300, 400, 500, 600, 700) et/ou inscrites dans le champ d'identification du récipient de pesée (100, 200, 300, 400, 500, 600, 700), et
• en ce que suite à la sixième étape, les informations enregistrées dans le moyen d'enregistrement électronique (150, 450, 550, 650, 750) du récipient de pesée (100, 200, 300, 400, 500, 600, 700) et/ou inscrites dans le champ d'identification sont enregistrées dans un moyen d'enregistrement électronique (705) agencé sur le conteneur (190, 290, 390, 490, 790) et/ou transférées vers un champ d'identification du conteneur (190, 290, 390, 490, 790).
